# FASCICULE DE BREVET EUROPEEN

(11) **EP 3 368 244 B1**
(45) Date de publication et mention de la délivrance du brevet: **15.07.2020**
(21) Numéro de dépôt: 16806213.1
(22) Date de dépôt: 18.10.2016
(51) Int. Cl.: B23K 35/30, B23K 1/00, B23P 6/00, F01D 5/00, F01D 11/12, B23K 101/00

(54) **PROCEDE POUR REALISER UNE PIECE D'ETANCHEITE A CORPS EN SUPERALLIAGE CONTENANT DU BORE ET REVETU**
VERFAHREN ZUR HERSTELLUNG EINES VERSIEGELUNGSTEILS MIT EINEM KÖRPER AUS EINER BORONHALTIGEN SUPERLEGIERUNG UND MIT BESCHICHTUNG
METHOD FOR PRODUCING A SEALING COMPONENT WITH A BODY MADE OF BORON-CONTAINING SUPERALLOY AND COATED

(30) Priorité: 29.10.2015 FR 1560385
(43) Date de publication de la demande: 05.09.2018
(73) Titulaire: Safran Aircraft Engines, 75015 Paris (FR)
(72) Inventeur: MONGIS, Thomas, Guillaume, 77550 Moissy-Cramayel (FR); LOPVET, Christophe, Joël, 77550 Moissy-Cramayel (FR)
(74) Mandataire: Ernest Gutmann - Yves Plasseraud S.A.S.
(86) Numéro de dépôt international: PCT/FR2016/052693
(87) Numéro de publication internationale: WO 2017/072431

(56) Documents cités:
- EP-A1- 1 416 063
- EP-A1- 2 159 460
- EP-A2- 2 065 565
- WO-A2-02/42610
- US-A1- 2004 023 056
- US-A1- 2011 117 385

## Description

L'invention se rapporte au domaine général des ensembles à anneau fixe d'une turbine à gaz. Elle vise plus particulièrement la fabrication ou la réparation de tels ensembles à enveloppe ou anneau fixe d'une turbine haute-pression de turbomachine.

Dans les moteurs à turbine à gaz ici concernés, de l'air sous pression et du carburant sont brûlés dans une chambre de combustion pour ajouter de l'énergie thermique à des gaz en circulation.

Les effluents provenant de la chambre comprennent des gaz à haute température qui s'écoulent vers l'aval suivant un trajet d'écoulement annulaire à travers la section de la turbine du moteur.

A l'entrée de la turbine qui suit la chambre de combustion, les gaz sont dirigés vers une série d'aubes qui s'étendent radialement vers l'extérieur à partir du rotor du moteur, la direction radiale étant définie par rapport à l'axe général de rotation du moteur.

Une virole annulaire qui est supportée par le carter de turbine entoure les extrémités radialement extérieures de ces aubes pour contenir les gaz dans la veine créée.

L'espace radial libre entre ces extrémités ou sommets d'aubes et la virole est minimisée pour empêcher la fuite de gaz autour desdits sommets.

Des anneaux fixes, comme précités, offrent une surface de frottement pour les sommets d'aubes.

On cherche alors à ce que ces sommets d'aubes frottent en surface de languettes ou plaquettes d'étanchéité qui typiquement recouvrent, de façon radialement intérieure par rapport à eux, les corps desdits anneaux, réduisant ainsi la quantité d'air qui peut contourner les aubes de turbine.

Minimiser cette quantité d'air de contournement augmente le rendement du moteur.

Une fonction secondaire de l'anneau est de protéger thermiquement l'environnement extérieur vis-à-vis de la veine de gaz chaud.

Ainsi, l'anneau doit être conçu pour être à la fois résistant aux effets corrosifs et d'oxydation des gaz chauds et à l'érosion mécanique par frottement. L'usure de son revêtement est donc problématique.

Lors de la fabrication d'origine de la pièce neuve, les languettes ou plaquettes, qui donc recouvrent les corps des anneaux, sont typiquement déposées en revêtement sur ces corps par une technique dite HVOF (High Velocity Oxy Fuel/ procédé « oxyfuel » à grande vitesse).

L'HVOF est, comme connu, une technique de traitement de surface par voie sèche. Dans ce système de projection thermique, un gaz vecteur sert à accélérer et transporter jusqu'au substrat de fines particules (typiquement 5 à 500 micromètres) qui peuvent être à l'état liquide, pâteux, voir solide. Ce gaz vecteur peut être aussi source enthalpique, permettant de chauffer ces particules jusqu'au point de fusion. Un arc électrique peut aussi être utilisé pour fondre le matériau. Les particules ainsi projetées sur le substrat s'écrasent selon leur vitesse, état physique, température etc. L'accumulation des particules sur le substrat permet de réaliser le revêtement.

L'HVOF a comme inconvénients d'être peu répandu et délicat à mettre en œuvre. En particulier les réglages de l'appareillage permettant de le réaliser sont difficiles. Et l'état de surface du corps de l'anneau doit être exempt d'oxyde pour obtenir une bonne liaison avec le revêtement. En outre, un état sablé (rugueux) est requis, pour une bonne liaison et un bon accrochage du dépôt HVOF.

EP 2159460 divulgue déjà un procédé pour réaliser une pièce d'étanchéité comprenant un corps en superalliage recouvert d'un revêtement neuf formé d'un mélange entre un alliage et du bore et pouvant être placé au contact d'une extrémité d'aube de turbine à gaz.

Or il ressort de ce qui précède qu'à un moment il va falloir remplacer soit toute la pièce (anneau et revêtement), soit le seul revêtement, pour restaurer les performances du moteur. Ceci sera d'ailleurs vrai même si l'anneau concerné n'est pas celui d'une turbine HP.

Dans une démarche de réparation de pièces, en l'espèce un anneau ainsi fabriqué que l'on va chercher à réparer plutôt qu'à remplacer, deux problèmes vont alors se poser : d'abord il s'agit d'une démarche peu répandue ; en outre, il faut qu'il n'y ait pas de trace de l'ancien dépôt HVOF, ce qui nécessiterait d'usiner en profondeur le matériau de base (corps de l'anneau). Ceci est une grave contrainte. L'HVOF n'est donc pas adapté à une réparation sur anneau.

Une solution alternative est à trouver, d'autant que le matériau typique d'un corps d'anneau est un superalliage, matériau coûteux et délicat à usiner.

Aussi, pour réaliser donc une pièce d'étanchéité, neuve ou réparée, comprenant un corps en superalliage recouvert (typiquement sur une face) d'un revêtement neuf formé d'un mélange entre un alliage et du bore et pouvant être placé au contact d'une extrémité d'aube de turbine à gaz, est-il proposé de conduire les étapes suivantes :
- a) on fabrique par moulage ledit revêtement neuf en un alliage de type Cobalt-Nickel-Chrome-Aluminium-Yttrium (CoNiCrAIY) contenant en outre entre 0,5 et 5% en masse (%wt) de bore (B),
- b) et on brase ensemble le corps en superalliage et ledit revêtement neuf, de façon à obtenir ladite pièce d'étanchéité.

De fait, l'alliage dans le mélange sera donc de type CoNiCrAIY et le bore sera contenu en une quantité massique (%wt) entre 1.7% et 2.5%.

Dans ce cadre est aussi visée la réalisation spécifique d'un anneau de turbine comprenant un corps recouvert d'un revêtement, ce procédé de réalisation étant conforme à celui qui précède, avec possiblement tout ou partie des particularités complémentaires qui suivent, ledit corps en superalliage et ledit revêtement neuf une fois brasés ensemble selon l'étape b) constituant respectivement ceux dudit anneau qui définit ainsi une pièce d'étanchéité.

Un avantage général de cette solution est que le brasage autorise un état de surface avec un peu d'oxyde, ou sans état de surface finement sablé ; des traces de CoNiCrAIY sont acceptables, ce qui permet d'usiner moins le matériau du corps en vue du brasage. Par conséquent, l'anneau pourra être réparé davantage de fois par cette technique que si on avait cherché à recouvrir par le revêtement neuf le corps en superalliage en recourant à un nouveau dépôt HVOF.

Un autre avantage est que le revêtement brasé a une couche diffusée plus importante, ce qui améliore la tenue du revêtement sur le corps en superalliage. Avec les dépôts HVOF, il arrive qu'il y ait des phénomènes d'écaillage du revêtement, si l'état de surface n'est pas parfaitement sablé.

En outre, l'HVOF impose un temps de projection très long ; et il y a un risque de décollement du dépôt

Le brasage sera favorablement un brasage fort. Pour mémoire le brasage est une opération d'assemblage consistant à assembler des articles à l'aide d'un métal d'apport à l'état liquide, ayant une température de fusion inférieure à celle des articles à réunir, et mouillant le matériau de base qui ne participe pas par fusion à la constitution du joint. Le brasage produit des liaisons chimiquement et structuralement hétérogènes. Un brasage est fort s'il est réalisé avec des métaux d'apport dont le point de fusion est supérieur à 450°C.

Et pour rappel, et à toute fin, la norme ISO 4063 se rapporte au brasage.

Comme cela a été certainement noté, la technique de la solution ci-dessus pourra être utilisée pour réaliser une pièce d'étanchéité neuve.

Dans le cadre d'une réparation, la première réparation sera favorablement conduite avec les étapes suivantes :
- c) avant l'étape b), sur une pièce d'étanchéité déjà utilisée réalisée neuve avec un corps en un superalliage recouvert d'un revêtement détérioré, en un alliage de type Cobalt-Nickel-Chrome-Aluminium-Yttrium (CoNiCrAlY) - a priori donc sans bore -, on retirera ledit revêtement détérioré,
- d) puis on conduira l'étape b), en brasant ensemble le corps (3) en superalliage et ledit revêtement neuf (1) contenant le bore, à la place du revêtement détérioré retiré.

Est aussi prévu le cas dans lequel ladite pièce d'étanchéité déjà utilisée aura été réalisée, neuve, avec un dit corps recouvert, par un dépôt HVOF ou un brasage, du revêtement que l'on retire à l'étape c).

En d'autres termes, lors d'une telle réalisation de pièce neuve, on aura donc antérieurement recouvert du revêtement le corps soit par dépôt HVOF, soit déjà par brasage. Dans ce dernier cas, pour produire une pièce neuve, on aura brasé directement sur le corps en superalliage neuf, en remplacement intégral de l'HVOF. L'HVOF ne sera alors plus du tout utilisé.

Dans le cadre d'une réparation ultérieure (seconde, troisième...), on interviendra de préférence comme suit :
- c) avant l'étape b), sur une pièce d'étanchéité déjà utilisée (dont la technique de fabrication neuve n'est plus forcément identifiable) ayant un corps en un superalliage recouvert d'un revêtement détérioré, en un alliage de type Cobalt-Nickel-Chrome-Aluminium-Yttrium (CoNiCrAlY) contenant en outre entre 0,5 et 5% en masse (%wt) de bore, on retirera ledit revêtement détérioré,
- d) puis on conduira l'étape b), en brasant ensemble le corps en superalliage et ledit revêtement neuf contenant le bore, à la place du revêtement détérioré retiré.

Des résultats probants ont en particulier été obtenus lorsque le matériau du corps en superalliage était de l'AM1. Un autre superalliage est aussi utilisable : RENE N5.

Le corps en superalliage et ledit revêtement neuf contenant le bore étant donc brasables ensemble, il est par ailleurs conseillé, pour tirer au mieux parti de la présence du bore, de réaliser de préférence ledit brasage à une température inférieure à la température de mise en solution complète de la phase γ' du matériau de base du corps, de type Ni3Al dans l'exemple privilégié, et/ou de préférence à une température comprise entre 1000°C et 1300°C, cette phase γ' donnant en grande partie les caractéristiques mécaniques du superalliage.

Et toujours par souci d'optimisation de la qualité du brasage, il est recommandé que l'alliage de type Cobalt-Nickel-Chrome-Aluminium-Yttrium (CoNiCrAlY) du revêtement présente la composition en masse (%wt) suivante:

| Ni | Cr | Al | Y | Autre(s) (max) | Co |
|---|---|---|---|---|---|
| 29.0 - 35.0 | 18.0 - 24.0 | 5.0 - 11.0 | 0.1 - 0.8 | 0.5-1.0 | compléments à 100 |

La partie « Autres max : 0.5-1.0%wt » correspond à des impuretés.

Dans le même souci, il est prévu que la quantité en masse (%wt) de bore dans l'alliage du revêtement de type Cobalt-Nickel-Chrome-Aluminium-Yttrium (CoNiCrAlY)- soit comprise entre 1.7% et 2.5%, et de préférence entre 1.9% et 2.2%.

Ceci sera en particulier approprié avec un corps en AM1, comme ce le sera (même si on retenir un autre superalliage pour le corps) si on réalise ledit brasage du revêtement neuf contenant le bore à une température comprise entre 1000°C et 1250°C, et de préférence entre 1150°C et 1210°C.

Une difficulté de fabrication du revêtement en un alliage de type Cobalt-Nickel-Chrome-Aluminium-Yttrium (CoNiCrAlY) sera en outre résolue en le réalisant par moulage par injection de métal (MIM) d'une plaquette à revêtement fritté densifié thermiquement (TDC).

En effet, des tests ont montré (voir ci-après) qu'un revêtement neuf déposé par brasage d'une plaquette TDC a des caractéristiques similaires à un revêtement déposé par HVOF d'un point de vue abradabilité, dureté et porosité.

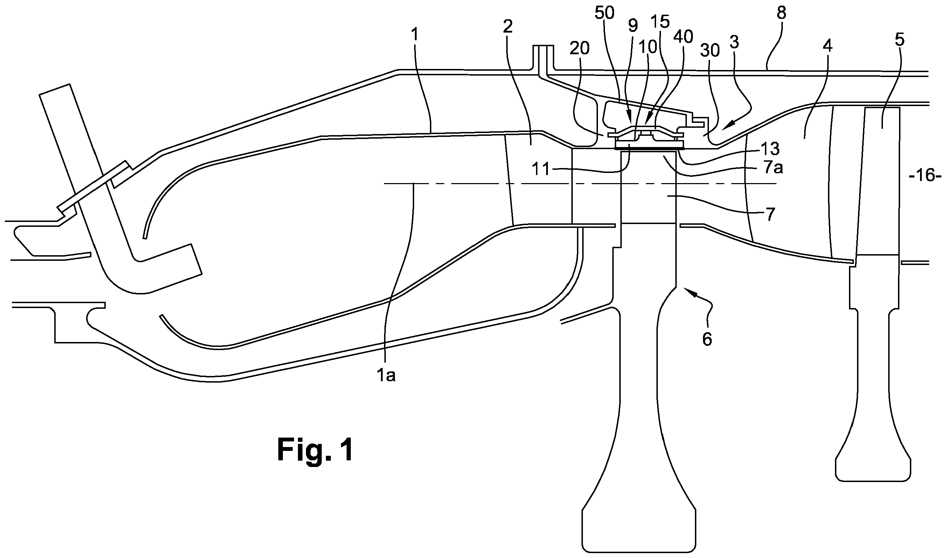

Une description complémentaire va maintenant suivre, en référence notamment à la figure 1 qui montre une coupe longitudinale (axiale) d'une partie de turbomoteur.

Même si un autre environnement peut voir l'invention s'appliquer on va, dans ce qui suit, traiter l'application de l'invention à une turbine HP, dès lors que les contraintes d'étanchéité et de température y sont fortes.

Figure 1, sont représentés de façon très schématique, de l'amont vers l'aval dans le sens d'écoulement de flux gazeux dans une turbine à gaz, suivant l'axe longitudinal 1a de la turbomachine, une chambre de combustion 1, un distributeur de turbine 2 disposé en sortie de la chambre de combustion, une turbine haute-pression (HP) 3, un redresseur de flux 4 et un premier étage d'une turbine basse-pression (BP) 5.

La turbine HP 3 comprend une roue de turbine 6 mobile en rotation autour de l'axe 1a et portant des aubes 7 et un ensemble d'anneau de turbine. Les aubes 7 sont en un superalliage de type monocristal à base Ni ; dans l'exemple privilégié en AM1.

L'ensemble d'anneau de turbine comprend un anneau de turbine 10 qui est donc une pièce d'étanchéité.

Typiquement, l'anneau d'un tel ensemble à anneau fixe est sectorisé, c'est-à-dire qu'il se compose d'une pluralité de segments réunis bout à bout, circonférentiellement, autour de l'axe 1a.

L'ensemble à anneau fixe définit ainsi localement l'une des parois (celle radialement extérieure) de la veine 16 d'écoulement des gaz chauds provenant de la chambre de combustion 1 de la turbomachine et traversant la turbine.

Pour résister aux températures imposées, l'anneau de turbine 10 comprend un corps 11 recouvert, face aux aubes 7, d'un revêtement 13 brasé. Au moins le revêtement 13 est sectorisé. Le corps 11 est en un superalliage de type monocristal à base Ni; dans l'exemple privilégié en AM1.

Suivant les conditions opératoires, et en particulier quand la turbomachine fonctionne, les aubes 7 viennent au contact du revêtement 13 par leurs extrémités libres 7a.

Typiquement par l'intermédiaire d'un dispositif à entretoise, l'anneau de turbine 10 est fixé sur le carter 8 de la turbine qui est radialement extérieur par rapport aux aubes.

Comme illustré figure 1, l'anneau 10 peut pour cela être supporté par une structure de support métallique 15. La structure de support 15 peut par exemple comprendre un premier support annulaire, amont 20 et un deuxième support annulaire, aval, 30, qui serrent axialement l'anneau 10 entre eux, ainsi qu'une couronne métallique 40 serrée aussi entre les supports 20,30 et qui entoure l'anneau. Une branche 50 relie et fixe les supports 20,30 au carter de turbine 8.

L'anneau de turbine 10 pourvu du corps 11 recouvert du revêtement 13 brasé peut être issu de fabrication, donc être une pièce neuve.

Le revêtement 13 brasé peut aussi être une pièce de remplacement, même si ce revêtement est neuf, dans le sens où il aura alors remplacé, sur le corps 11, un ancien revêtement détérioré.

Deux hypothèses dans ce cas :
- soit il s'agissait d'un revêtement ancien de même composition que le nouveau revêtement brasé 13,
- soit il s'agissait d'un revêtement ancien de composition différente.

En effet, un avantage du revêtement brasé 13 est qu'il peut avoir été brasé en remplacement soit d'un revêtement identique (en composition) précédemment brasé sur le corps 11, soit d'un revêtement d'origine de composition différente.

Dans ce dernier cas, le revêtement 13 brasé a a priori pris la place d'un revêtement détérioré fabriqué en un alliage de type Cobalt-Nickel-Chrome-Aluminium-Yttrium (CoNiCrAlY), dépourvu de bore, ayant recouvert un corps 11 en superalliage, typiquement un corps en AM1, lors de la fabrication d'origine de l'anneau de turbine 10.

En effet, il est typique à ce jour de réaliser à neuf un anneau 10 en recouvrant son corps 11 par un tel revêtement de type CoNiCrAlY via un dépôt HVOF (High Velocity Oxy Fuel/ procédé « oxyfuel » à grande vitesse) ; avec toutefois les inconvénients déjà exposés que l'on peut résumer en ce qu'une fois détérioré, l'HVOF n'est pas une technique adaptée à une réparation sur l'anneau 10. En particulier, s'il y a eu une mauvaise préparation de surface par sablage, il y a risque de décollement du revêtement HVOF.

Dans ces conditions, la solution alternative proposée afin de remettre alors à neuf le revêtement du corps 11 est, comme on l'a déjà compris :
- a) de fabriquer par moulage le revêtement 13 neuf en un alliage de type Cobalt-Nickel-Chrome-Aluminium-Yttrium (CoNiCrAlY) contenant en outre entre 0,5 et 5% en masse (%wt) de bore,
- b1) de débarrasser le corps des restes du revêtement détérioré,
- b2) puis de venir braser ensemble le corps 11 en superalliage et ce revêtement neuf, ce qui va permettre de retrouver une pièce d'étanchéité 10 adaptée.

Pour se replacer aux bonnes cotes, un usinage du nouveau revêtement est réalisé.

Typiquement, pour retirer les restes du revêtement détérioré, on a usiné la face concernée du corps 11, de façon à en retirer le matériau CoNiCrAlY encore présent.

A ce sujet, il est rappelé qu'un anneau peut en particulier être réparé plus facilement et plus de fois par brasage, en particulier d'une plaquette MIM contenant du bore que par HVOF. A partir de de la seconde réparation, braser sur des traces de TDC ne va en outre plus poser les problèmes liés à l'HVOF.

De fait, fabriquer un revêtement 13 neuf à partir une plaquette à revêtement fritté densifié thermiquement (TDC : Thermal Densified Coating) fabriquée par MIM (Metal Injection Molding / moulage par injection de métal) constitue une solution pratique intéressante en termes de qualité de pièce finie et de facilité, fiabilité et sécurité de fabrication.

En parallèle à la préparation de la surface à braser du corps 11, on aura donc avantageusement procédé à la fabrication d'une série de plaquettes TDC correspondant à la bonne composition chimique du revêtement et aux dimensions à respecter. A ce sujet, les plaquettes seront de préférence légèrement plus grandes que le corps de l'anneau avec (sensiblement) le même arrondi que la face intérieure à braser du corps 11. Pour mémoire, le MIM est un moulage par injection de poudres métalliques. Le métal (typiquement l'alliage) est mélangé avec un liant, puis injecté dans un moule; la pièce est ensuite « déliantée » (décomposition chimique du liant) dans un four sous atmosphère contrôlée, puis frittée dans un four sous vide. Le frittage est à haute température, par exemple 1250-1350°C pendant quelques heures, de façon à obtenir la cohésion des particules de métal entre elles, apportant la densification du matériau et la résistance des pièces. Cette technique a l'avantage de permettre de créer des formes complexes avec un bon état de surface et des tolérances fines. Il est possible de créer des alliages extrêmement homogènes, qui ont une très bonne résistance à la corrosion, entre autres qualités.

En tant que revêtement 13 neuf, une de ces plaquettes TDC MIM est ensuite posée sur la face usinée du corps 11.

Puis l'ensemble est brasé au four (donc un sous un second vide partiel ; typiquement moins de 10⁻²Pa) avant que le revêtement 13 soit usiné aux bonnes cotes.

Pour que le brasage opère, les matériaux du revêtement 13 et du corps 11 auront bien sûr été choisis pour être brasables ensemble.

Notamment avec un alliage de type Cobalt-Nickel-Chrome-Aluminium-Yttrium (CoNiCrAlY) présentant la composition en poids précitée, et donc du bore entre 0,5 et 5% en masse (%wt), un corps en monocristal AM1 ou en René N5 (superalliages à base Ni) conviendra, par exemple.

Favorablement, on réalisera le brasage à une température inférieure à la température de mise en solution complète de la phase γ' (ici de type Ni3Al) du matériau du corps, et/ou de préférence à une température comprise entre 1000°C et 1300°C.

Cette température de mise en solution complète, c'est-à-dire d'austénitisation, qui permet de mettre en solution les différents constituants solubles dans la solution solide et ainsi de conserver les propriétés du matériau, est donc la température en-dessous de laquelle le brasage est à conduire pour obtenir les résultats attendus : qualité du brasage, tenue dans le temps.

Favorablement, l'alliage du revêtement neuf 13 compatible avec le matériau de base du corps 11 aura un point de fusion inférieur au point de fusion de ce matériau de base.

Et on pourra même choisir, par sécurité et facilité de mise en œuvre, que la température de brasage soit inférieure à la température de fusion du matériau du corps ; pour rappel environ 1 385°C s'il s'agit de René N5 ou d'AM1, par exemple.

De fait, avec un corps en AM1, et d'autant plus si, comme les considérations des inventeurs et les résultats ci-après y invitent, la quantité en masse (%wt) de bore dans l'alliage du revêtement de type Cobalt-Nickel-Chrome-Aluminium-Yttrium (CoNiCrAlY) est comprise entre 1.7% et 2.5%, et de préférence entre 1.9% et 2.2%, on réalisera favorablement le brasage du revêtement neuf 13 contenant le bore à une température comprise entre 1000°C et 1250°C, et de préférence entre 1150°C et 1210°C.

Ainsi aura été surmontée une principale difficulté rencontrée liée au fait que le CoNiCrAlY se brase à une température de 1230°C minimum. Or, divers superalliages, et notamment l'AM1, ne peut pas être soumis à une température aussi élevée.

Inclure du bore dans les conditions évoquées aura permis d'abaisser la température de brasage. Et une proportion de bore entre 1.7 et 2.5 wt%, avec une préférence pour 1.9 à 2.2 wt%, aura été notablement favorable à une bonne mouillabilité du CoNiCrAlY sur la pièce ainsi qu'une zone diffusée conforme à l'utilisation ultérieure à faire de la pièce, le pourcentage indiqué de bore ayant été fixé par rapport à la (gamme de) température(s) de brasage précitée ; voir résultats ci-après avec 1.5 % de bore (manque de mouillabilité de la plaquette sur le substrat AM1) et avec 2,5 % de bore (la plaquette en CoNiCrAlY s'écroule et pas de conservation de la préforme adaptée à un usinage ultérieur).

Il s'est en fait avéré que l'utilisation de l'alliage CoNiCrAlY avec l'adjonction prévue de bore (entre donc 0.5 et 5 wt%, avec donc une préférence pour 1.7 à 2.2 wt%) correspond en fait à une brasure type alliage base cobalt avec un pourcentage de bore qui est en phase avec une brasure type base Nickel, ou Cobalt; voir composition RBD 191 et RBD 61 ci-après (en wt%).

**RBD 191 :**

| Eléments | Co | Ni | Cr | W | Si | B | C | P |
|---|---|---|---|---|---|---|---|---|
| Mini | Base | 27 | 17,2 | 4,5 | 1,2 | 0,8 | 0,3 | |
| Maxi | | 30 | 18,6 | 5,6 | 1,5 | 0,95 | 0,40 | 0,04 |

**RBD 61 :**

| Eléments | Ni | Co | Cr | Mo | Al | Ti | Si | B | C | Zr | P |
|---|---|---|---|---|---|---|---|---|---|---|---|
| Mini | Base | 16,5 | 10,4 | 3,3 | 2,85 | 2,45 | 1 | 0,68 | | | |
| Maxi | | 19 | 12,2 | 4,2 | 3,15 | 2,8 | 1,30 | 0,8 | 0,06 | 0,05 | 0,01 |

En outre, des essais de faisabilité avec du Silicium en remplacement du bore n'ont pas apporté de résultats conformes au niveau de la zone diffusée (phénomènes de porosités) ; d'où le choix confirmé du Bore, dans les conditions mentionnées.

L'épaisseur du revêtement neuf 13 sera favorablement comprise entre 2.5 et 8.5mm, de préférence 3 à 5mm.

Des essais de brasage de plaquettes (revêtement 13) TDC fabriquées par MIM, en CoNiCrAlY, sur des anneaux en AM1 ont été conduits.

Dans le cas d'utilisation de métal d'apport approvisionné sous forme de poudre, il est recommandé d'utiliser un liant. Le mélange poudre + liant doit être lisse et homogène, et ne doit pas contenir de liant en excès. Le liant doit permettre de maintenir le métal d'apport sur les assemblages jusqu'à la température de brasage.

Les TDC utilisés pour la réparation de ces pièces étaient un mélange d'alliage CoNiCrAlY (poudre Amdry 995) et de bore. Trois essais ont été réalisés à différentes teneurs en bore (de 1,5% à 2,5% wt).

Pour mémoire, un TDC est une plaquette avec une préforme correspondant à la pièce réceptrice, de dimensions supérieures à ce que l'on souhaite obtenir.

L'élaboration des plaquettes de TDC a donc été réalisée par procédé MIM, suivant les étapes ci-dessous, avec un brasage au four, sous vide partiel secondaire :
- fabrication de 3 pièces (mélange de CoNiCrAlY + B) ;
- mise en forme de trois séries de TDC à différentes teneurs massiques en B (1,5%, 2% et 2,5%) ;
- déliantage chimique;
- déliantage thermique sous H2 avec palier de 1h à 1000°C pour pré-frittage des TDC ;
- brasage standard 15 min à 1210°C + 2h à 1060°C des TDC sur pièce support en AM1.

En sortie de traitement de déliantage thermique et de pré-frittage, les TDC placés sur les extérieurs du four présentaient une oxydation superficielle.

Les résultats ont montré que 2% (massique) de B dans le CoNiCrAlY permet d'abaisser la température de brasage vers 1210°C. Cette température est presque la limite acceptable haute pour l'AM1. Il s'agit de fait de la température standard des cycles de réparation d'autres pièces ; on pourra ainsi regrouper plusieurs types de pièces dans une même fournée. De plus 2% de bore (valeur optimale) permet d'obtenir une bonne mouillabilité ; ni trop ni pas assez, ce qui améliore la tenue du revêtement ainsi que la couche diffusée. La température maximale admissible pour le brasage AM1 sera de 1230°C

A 1,5%, on n'obtient pas une diminution suffisante de la T°C de brasage. La mouillabilité est limite.

Et à 2,5% une grande mouillabilité et une dégradation de la forme de la plaquette ont été constatées ; ceci n'est pas rédhibitoire.

On peut estimer, en référence à ce qui précède mais aussi à l'expérience et aux connaissances des inventeurs, que l'intervalle de proportion de bore est [1.7 à 2.5 wt%] avec une préférence pour [1.9 à 2.2 wt%].

Les revêtements déposés par brasage de plaquette TDC présentaient des caractéristiques similaires à un revêtement déposé par HVOF d'un point de vue abradabilité, dureté et porosité.

Les tests ont montré que le nouveau revêtement déposé par brasage de plaquette TDC avait des caractéristiques similaires au revêtement déposé par HVOF d'un point de vue abradabilité, dureté et porosité.

Un avantage constaté a été qu'une fois brasé le revêtement 13 crée une couche diffusée plus importante qu'un dépôt HVOF, ce qui améliore la tenue du revêtement sur la pièce support (en AM1 dans les essais) impeccable au moment de ce dépôt.

## Revendications

1. Procédé pour réaliser une pièce d'étanchéité (10) comprenant un corps (11) en superalliage recouvert d'un revêtement neuf (13) formé d'un mélange entre un alliage et du bore et pouvant être placé au contact d'une extrémité d'aube (7) de turbine à gaz, **caractérisé en ce qu'**il comprend des étapes où :
- a) on fabrique par moulage ledit revêtement neuf, l'alliage dans le mélange étant de type Cobalt-Nickel-Chrome-Aluminium-Yttrium (CoNiCrAlY) et le bore étant contenu en une quantité massique (%wt) entre 1.7% et 2.5%,
- b) et on brase ensemble le corps en superalliage et ledit revêtement neuf (1) de façon à obtenir ladite pièce d'étanchéité.

2. Procédé selon la revendication 1, où la pièce d'étanchéité (10) issue de l'étape b) est une pièce réparée obtenue avec les étapes suivantes :
- c) avant cette l'étape b), sur une pièce d'étanchéité déjà utilisée réalisée neuve avec un corps (11) en un superalliage recouvert d'un revêtement détérioré, en un alliage de type Cobalt-Nickel-Chrome-Aluminium-Yttrium (CoNiCrAlY), on retire ledit revêtement détérioré,
- d) puis on conduit l'étape b), en brasant ensemble le corps (11) en superalliage et ledit revêtement neuf (13) contenant le bore, à la place du revêtement détérioré retiré.

3. Procédé selon la revendication 1, où la pièce d'étanchéité (10) issue de l'étape b) est une pièce réparée obtenue avec les étapes suivantes :
- c) avant cette l'étape b), sur une pièce d'étanchéité déjà utilisée ayant un corps (11) en un superalliage recouvert d'un revêtement détérioré, en un alliage de type Cobalt-Nickel-Chrome-Aluminium-Yttrium (CoNiCrAlY) contenant en outre entre 0,5 et 5% en masse (%wt) de bore, on retire ledit revêtement détérioré,
- d) puis on conduit l'étape b), en brasant ensemble le corps (11) en superalliage et ledit revêtement neuf (13) contenant le bore, à la place du revêtement détérioré retiré.

4. Procédé selon la revendication 2 ou 3, dans lequel ladite pièce d'étanchéité déjà utilisée a été réalisée, neuve, avec un dit corps recouvert, par un dépôt HVOF ou un brasage, du revêtement que l'on retire à l'étape c).

5. Procédé selon l'une des revendications précédentes, où le matériau du corps (11) en superalliage est un superalliage de type monocristal à base de Nickel.

6. Procédé selon l'une des revendications 1 à 3 seule ou combinaison avec la revendication 5, dans lequel à l'étape b) de brasage du corps (11) en superalliage et du revêtement neuf (13) contenant le bore, on réalise ledit brasage à une température inférieure à la température de mise en solution complète de la phase γ' du matériau du corps, et/ou de préférence à une température comprise entre 1000°C et 1300°C.

7. Procédé selon l'une des revendications précédentes où l'alliage de type Cobalt-Nickel-Chrome-Aluminium-Yttrium (CoNiCrAlY) présente la composition en poids suivante:
| Ni | Cr | Al | Y | Autre(s) (max) | Co |
|---|---|---|---|---|---|
| 29.0 - 35.0 | 18.0-24.0 | 5.0-11.0 | 0.1-0.8 | 0.5-1.0 | compléments à 100 |

8. Procédé selon l'une des revendications 1 à 3 seule ou en combinaison avec l'une au moins des revendications 5 à 7, où ladite quantité en masse (%wt) de bore dans l'alliage du revêtement de type Cobalt-Nickel-Chrome-Aluminium-Yttrium (CoNiCrAlY) est comprise entre 1.9% et 2.2%.

9. Procédé selon la revendication 4 seule ou en combinaison avec l'une au moins des revendications 5 et 7, où ladite quantité en masse (%wt) de bore est comprise entre 1.9% et 2.2%.

10. Procédé selon la revendication 5 seule ou en combinaison avec l'une des revendications 6 à 8, où on réalise ledit brasage du revêtement neuf (13) contenant le bore à une température comprise entre 1000°C et 1250°C.

11. Procédé selon l'une des revendications précédentes où la fabrication dudit revêtement (13) en un alliage de type Cobalt-Nickel-Chrome-Aluminium-Yttrium (CoNiCrAlY) est réalisée par moulage par injection de métal (MIM) d'une plaquette à revêtement fritté densifié thermiquement (TDC).

12. Procédé selon l'une selon la revendication 2 seule ou en combinaison avec l'une des revendications 5 à 10 non rattachée à la revendication 4, où, avant l'étape c), lors de la réalisation de la pièce neuve, on a recouvert du revêtement (13) le corps (11) par dépôt HVOF.

13. Procédé selon l'une quelconque des revendications précédentes dans lequel la pièce d'étanchéité est un anneau de turbine comprenant un corps recouvert d'un revêtement, dans lequel ledit corps (11) en superalliage et ledit revêtement neuf (13) constituent respectivement ceux dudit anneau qui définit ainsi une pièce d'étanchéité (10).

14. Procédé selon la revendication 5 seule ou en combinaison avec l'une des revendications 6 à 8, où on réalise ledit brasage du revêtement neuf (13) contenant le bore à une température comprise entre 1150°C et 1210°C.

## Patentansprüche

1. Verfahren zur Herstellung eines Dichtungsteils (10), das einen Körper (11) aus Superlegierung umfasst, der mit einer neuen Beschichtung (13) bestehend aus einer Mischung aus einer Legierung und Bor überzogen ist und mit einer Spitze (7) einer Gasturbinenschaufel in Kontakt gebracht werden kann, **dadurch gekennzeichnet, dass** es Schritte umfasst, in denen:
- a) die neue Beschichtung durch Gießen hergestellt wird, wobei die Legierung in der Mischung eine Kobalt-Nickel-Chrom-Aluminium-Yttrium-Legierung (CoNiCrAlY) ist und das Bor zu einem Massenanteil (Gew.-%) von 1,7 % bis 2,5 % enthalten ist,
- b) und der Körper aus Superlegierung und die neue Beschichtung (1) zusammengelötet werden, um das Dichtungsteil zu erhalten.

2. Verfahren nach Anspruch 1, wobei das Dichtungsteil (10) aus Schritt b) ein repariertes Teil ist, das durch folgende Schritte erhalten wird:
- c) Vor Schritt b) wird auf einem bereits verwendeten Dichtungsteil, das neu mit einem Körper (11) aus einer Superlegierung hergestellt wurde, der mit einer beschädigten Beschichtung aus einer Kobalt-Nickel-Chrom-Aluminium-Yttrium-Legierung (CoNiCrAlY) überzogen ist, die besagte beschädigte Beschichtung entfernt,
- d) dann wird Schritt b) durch Zusammenlöten des Superlegierungskörpers (11) und der neuen borhaltigen Beschichtung (13) anstelle der entfernten beschädigten Beschichtung durchgeführt.

3. Verfahren nach Anspruch 1, in dem das Dichtungsteil (10) aus Schritt b) ein repariertes Teil ist, das durch folgende Schritte erhalten wird:
- c) Vor Schritt b) wird auf einem bereits verwendeten Dichtungsteil, das einen Superlegierungskörper (11) aufweist, der mit einer beschädigten Beschichtung aus einer Kobalt-Nickel-Chrom-Aluminium-Yttrium-Legierung (CoNiCrAlY) überzogen ist, die des Weiteren einen Massenanteil (Gew.-%) von 0,5 % bis 5 % Bor enthält, die beschädigte Beschichtung entfernt,
- d) dann wird Schritt b) durch Zusammenlöten des Superlegierungskörpers (11) und der neuen borhaltigen Beschichtung (13) anstelle der entfernten beschädigten Beschichtung durchgeführt.

4. Verfahren nach Anspruch 2 oder 3, in dem das bereits verwendete Dichtungsteil neu hergestellt wurde mit einem Körper, der durch HVOF-Auftrag oder Löten mit der Beschichtung überzogen wurde, die in Schritt c) entfernt wird.

5. Verfahren nach einem der vorhergehenden Ansprüche, in dem das Material des Superlegierungskörpers (11) eine einkristalline Superlegierung auf Nickelbasis ist.

6. Verfahren nach einem der Ansprüche 1 bis 3 allein oder in Kombination mit Anspruch 5, in dem in Schritt b) des Zusammenlötens des Superlegierungskörpers (11) und der neuen borhaltigen Beschichtung (13) das Löten bei einer Temperatur kleiner der Temperatur der vollständigen Lösung des Materials des Körpers in der Y'-Phase und/oder vorzugsweise bei einer Temperatur zwischen 1000°C und 1300°C durchgeführt wird.

7. Verfahren nach einem der vorhergehenden Ansprüche, in dem die Kobalt-Nickel-Chrom-Aluminium-Yttrium-Legierung (CoNiCrAlY) die folgende Gewichtszusammensetzung aufweist:
| Ni | Cr | Al | Y | Sonstige(s) | (max) Co |
|---|---|---|---|---|---|
| 29,0 - 35, 0 | 18,0 - 24,0 | 5,0 - 11,0 | 0,1 - 0,8 | 0,5-1,0 | Ergänzung zu 100 |

8. Verfahren nach einem der Ansprüche 1 bis 3 allein oder in Kombination mit mindestens einem der Ansprüche 5 bis 7, in dem der Massenanteil (Gew.-%) von Bor in der Kobalt-Nickel-Chrom-Aluminium-Yttrium-Legierung (CoNiCrAlY) der Beschichtung 1,9 % bis 2,2 % beträgt.

9. Verfahren nach Anspruch 4 allein oder in Kombination mit mindestens einem der Ansprüche 5 und 7, in dem der Massenanteil (Gew.-%) von Bor 1,9 % bis 2,2 % beträgt.

10. Verfahren nach Anspruch 5 allein oder in Kombination mit einem der Ansprüche 6 bis 8, wobei das Löten der neuen borhaltigen Beschichtung (13) bei einer Temperatur zwischen 1000°C und 1250°C durchgeführt wird.

11. Verfahren nach einem der vorhergehenden Ansprüche, in dem die Herstellung der Beschichtung (13) aus einer Kobalt-Nickel-Chrom-Aluminium-Yttrium-Legierung (CoNiCrAlY) durch Metall-Spritzgießen (MIM) einer Einlage mit thermisch verdichteter, gesinterter Beschichtung (TDC) durchgeführt wird.

12. Verfahren nach Anspruch 2 allein oder in Kombination mit einem der nicht mit Anspruch 4 zusammenhängenden Ansprüche 5 bis 10, in dem vor Schritt c) der Körper (11) bei der Herstellung des neuen Teils durch HVOF-Auftrag mit der Beschichtung (13) überzogen wird.

13. Verfahren nach einem der vorhergehenden Ansprüche, in dem das Dichtungsteil ein Turbinenring ist, der einen mit einer Beschichtung überzogenen Körper aufweist, in dem der Körper (11) aus Superlegierung und die neue Beschichtung (13) jeweils die des Rings bilden, der somit ein Dichtungsteil (10) definiert.

14. Verfahren nach Anspruch 5 allein oder in Kombination mit einem der Ansprüche 6 bis 8, wobei das Löten der neuen borhaltigen Beschichtung (13) bei einer Temperatur zwischen 1150°C und 1210°C durchgeführt wird.

## Claims

1. A method for producing a sealing component (10) comprising a body (11) made of a superalloy covered with a new coating (13) formed from a mixing between an alloy and boron, and which can be so positioned as to contact a blade end (7) of a gas turbine, **characterized in that** it comprises the following steps:
- a) said new coating is obtained by moulding, said alloy in the mixing being of a Cobalt-Nickel-Chrome-Aluminium-Yttrium (CoNiCrAlY) type, and said boron being contained in an amount between 1.7% to 2.5% by weight (wt%),
- b) and the body made of superalloy and said new coating (13) are brazed together so as to obtain said sealing component.

2. The method according to claim 1, wherein the sealing component (10) produced in step b) is a repaired part obtained after executing the following steps:
- c) prior to step b), said damaged coating is removed from a previously used sealing component which had been initially produced as a new sealing component having a body (11) made of a superalloy coated with a damaged coating made of an alloy of the Cobalt-Nickel-Chromium-Aluminum-Yttrium (CoNiCrAlY) type,
- d) step b) is then executed, wherein the body (11) made of the superalloy and said new coating (13) containing boron are brazed together, instead of the removed damaged coating.

3. The method according to claim 1, wherein the sealing component (10) produced in step b) is a repaired part obtained after executing the following steps:
- c) prior to step b), said damaged coating is removed from a previously used sealing component having a body (11) made of a superalloy coated with a damaged coating made of an alloy of the Cobalt-Nickel-Chromium-Aluminum-Yttrium (CoNiCrAlY) type further containing from 0.5 to 5% by weight (wt%) of boron,
- d) step b) is then executed, wherein the body (11) made of the superalloy and said new coating (13) containing boron are brazed together, instead of the removed damaged coating.

4. The method according to claim 2 or 3, wherein the previously used sealing component has been initially produced as a new sealing component the body of which was covered, through an HVOF deposit or a brazing, with said coating which is removed at step c).

5. The method according to one of the preceding claims, wherein the material of the body (11) made of the superalloy is a nickel-based superalloy of the single crystal type.

6. The method according to one of claims 1 to 3, alone or in combination with claim 5, wherein in step b) of brazing the body (11) made of the superalloy and the new coating (13) containing boron, said brazing is carried out at a temperature lower than the complete solution temperature of the γ' phase of the body material, and/or preferably at a temperature between 1,000°C and 1,300°C.

7. A method according to one of the preceding claims, wherein the alloy of the Cobalt-Nickel-Chromium-Aluminum-Yttrium (CoNiCrAlY) type has the following composition by weight:
| Ni | Cr | Al | Y | Other component(s) (max) | Co |
|---|---|---|---|---|---|
| 29.0 - 35.0 | 18.0 - 24.0 | 5.0 - 11.0 | 0.1 - 0.8 | 0.5-1.0 | complements to 100 |

8. The method according to one of claims 1 to 3, alone or in combination with at least one of claims 5 to 7, wherein said quantity by weight (wt%) of boron in the alloy of the Cobalt-Nickel-Chromium-Aluminum-Yttrium (CoNiCrAlY) type of the coating ranges from 1.9% to 2.2%.

9. The method according to claim 4, alone or in combination with at least one of claims 5 to 7, wherein said quantity by weight (wt%) of boron ranges from 1.9% to 2.2%.

10. The method according to claim 5 alone or in combination with one of claims 6 to 8, wherein said brazing of the new coating (13) containing said boron is carried out at a temperature between 1,000°C and 1,250°C.

11. The method according to any one of the preceding claims, wherein said coating (13) made of an alloy of the Cobalt-Nickel-Chromium-Aluminum-Yttrium (CoNiCrAlY) type is produced by using metal injection molding (MIM) of a plate with a sintered thermally densified (TDC) coating.

12. The method according to claim 2 alone or in combination with one of claims 5 to 10 non-attached to claim 4, wherein prior to step c), during the production of the new component, the body (11) has been covered with the coating (13) by HVOF deposition.

13. The method according to any one of the preceding claims, wherein the sealing component is a turbine ring comprising a body covered with a coating, wherein said body (11), made of the superalloy, and said new coating (13) are those of said ring which thus defines a sealing component (10), respectively.

14. The method according to claim 5 alone or in combination with one of claims 6 to 8, wherein said brazing of the new coating (13) containing said boron is carried out at a temperature between 1,150°C and 1,210°C.
